# EUROPEAN PATENT SPECIFICATION

(11) **EP 1 278 374 B1**
(45) Date of publication and mention of the grant of the patent: **16.07.2008**
(21) Application number: 02254888.7
(22) Date of filing: 11.07.2002
(51) Int. Cl.: H04N 5/235

(54) **Image processing apparatus**
Bildverarbeitungsgerät
Appareil de traitement d'image

(30) Priority: 12.07.2001 JP 2001212302
(43) Date of publication of application: 22.01.2003
(73) Proprietor: CANON KABUSHIKI KAISHA, Tokyo (JP)
(72) Inventor: Hashimoto, Seiji, Ohta-ku, Tokyo (JP)
(74) Representative: Beresford, Keith Denis Lewis

(56) References cited:
- WO-A-98/20445
- DE-A- 19 956 274
- US-A- 5 991 467

## Description

The present invention relates to an image processing apparatus and, more particularly, to an image processing apparatus which performs image recognition with respect to fingerprints.

Information security is an important technique for reliable IT. An image recognition apparatus for performing image recognition with respect to fingerprints is an important apparatus for protecting information against unauthorized access through a communication network and realizing services such as electronic bidding, lottery, and e-commerce.

Use environments of the image recognition apparatus for obtaining images of fingerprints include a bright place under sunlight and a relatively dark place such as an indoor place. That is, the use of the apparatus in different external environments must be taken into consideration, and proper exposure amount control is required.

It is a concern of the present invention to provide an image processing apparatus which can perform proper exposure amount control.

International Patent Specification No. WO98/20445 discloses an optical scanning system having a calibrated pixel output- A detector includes an array of photosensitive sights that sense reflected light from an exposure region during the detector exposure period. A plurality of light sources are provided to light the exposure region and each light source is individually controllable during a detector exposure region so that the system's output can be calibrated.

United States Patent Specification No. US-A-5991467 discloses an image reading apparatus which can read images such as fingerprints. A light emitting unit emits light to pass through a transparent substrate onto a subject pressed against the substrate. A plurality of light receiving units are disposed on the substrate in the vertical and horizontal directions so as to receive light from the light emitting unit reflected from the subject. A reading device reads an image of the subject in accordance with the amount of light received by the light receiving unit.

Japanese Patent Specification No. JP-2000-224380 discloses a system in which the light emission time of LEDs and the exposure time of CCD sensors can be varied in order to control the output signals of an image pickup device.

According to the present invention, there is provided a fingerprint image processing apparatus as set out in claim 1.

Other features, and advantages of the present invention will be apparent from the following description of an embodiment of the invention, which is described by way of example only in conjunction with the accompanying drawings in which:
Fig. 1 is a block diagram showing the arrangement of an image recognition apparatus according to an embodiment of the present invention;
Fig. 2 is a block diagram showing the arrangement of a sensor 1;
Fig. 3 is a circuit diagram showing the arrangement of one pixel in the pixel area of the sensor 1;
Figs. 4A, 4B and 4C are views showing read-out areas in a case wherein specific image data are read out from the pixel area (image pickup area) in pre-driving or the like;
Fig. 5 is a view showing a sensor, a finger, and examples of the positions of pixel rows from which data are read out, and examples of accumulation times;
Fig. 6 is a graph showing an example of an output signal with an accumulation time of 3 msec;
Fig. 7 is a graph showing an example of an output signal with given external light in the ON state of the LED;
Fig. 8 is a graph showing the relationship between the accumulation time and the output signal level in a case wherein a light source is replaced;
Fig. 9 is a flow chart showing the operation of the image recognition apparatus according to an embodiment of the present invention;
Fig. 10 is a timing chart showing an example of the timing of pre-driving;
Fig. 11 is a timing chart showing pre-driving and main driving;
Fig. 12 is a flow chart showing the operation of the image recognition apparatus according to this embodiment; and
Fig. 13 is a flow chart showing the operation of the image recognition apparatus according to this embodiment.

An embodiment of the present invention will be described in detail below with reference to the accompanying drawings.

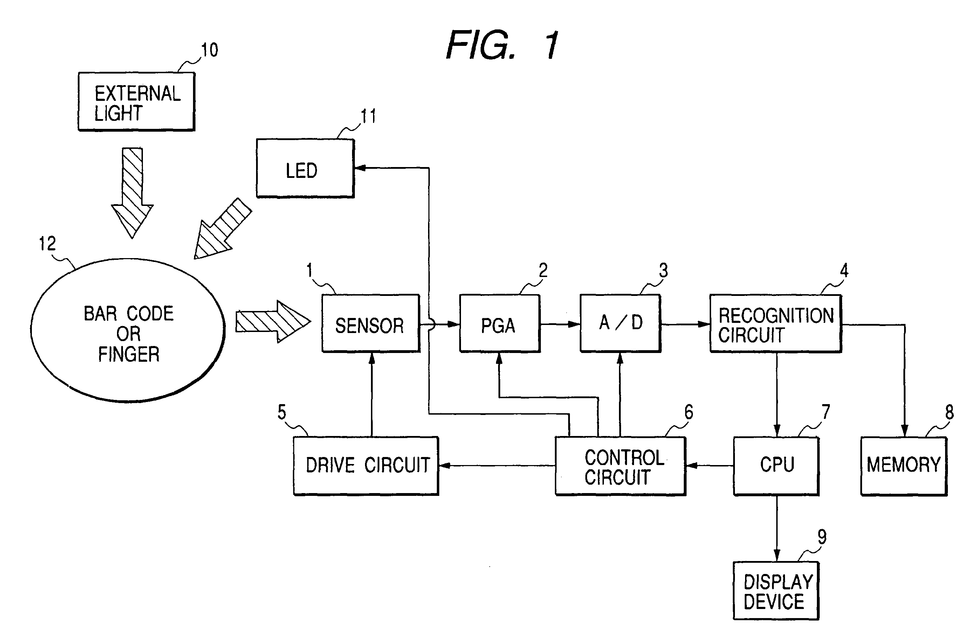

Fig. 1 is a block diagram showing the arrangement of an image recognition apparatus (image processing apparatus) according to an embodiment of the present invention. An object 12 is a finger. External light 10 with which the object 12 is irradiated is sunlight, guide light, or the like. When external light is weak, the object is irradiated with light from a light-emitting element as a light source, i.e., an LED 11 in this case. As a light source capable of controlling the intensity of light with which the object is irradiated, the LED 11 is used. The intensity of light is controlled by turning on/off the LED 11. The light source may be formed from one light-emitting element such as an LED capable of changing the intensity of light or a plurality of light-emitting elements such as LEDs. That is, any kind of light source can be used as long as the intensity of light with which the object is irradiated can be changed. Alternatively, the light source may be formed from the external light 10 alone without using any LED 11 capable of controlling the intensity of light as long as the intensity of the external light 10 can be controlled.

Note that the intensity of light with which an object is irradiated can be defined by irradiance (illuminance) representing a radiant flux (watt) incident per unit area of the object ("Optical Technique Handbook", p. 318, 4.1.3; published by Asakura Shoten).

Light reflected by or transmitted through the object 12 is incident on a sensor 1 serving as an image pickup means. The sensor 1 includes an electronic shutter serving as an accumulation control means. A signal photoelectrically converted by the sensor 1 is input to a PGA (Programmable Gain Amplifier) 2 which controls the level of an analog input signal so as to cover the entire resolution range of an A/D converter. The resultant signal is analog/digital-converted by an A/D converter 3. The output from the A/D converter 3 is subjected to image recognition processing in an image recognition circuit 4. Thus it is determined whether the pre-registered fingerprint of the user coincides with the read data of the fingerprint. The determination result is stored in a memory 8. The image recognition result is displayed on a display device 9 through a CPU 7. The output from the image recognition circuit 4 is also input to the CPU 7. The CPU 7 sends a control signal to a control circuit 6. The control circuit 6 controls the operations of a driver circuit 5 for driving the sensor 1, the PGA 2, the A/D converter 3, and the LED 11. The image recognition circuit 4 sends the output from the A/D converter 3 to the CPU 7. The CPU 7 determines whether the exposure amount detected by the sensor 1 is proper or not. Upon determining on the basis of the determination result that overexposure occurs, the CPU 7 sends to the control circuit 6, a control signal to shorten the accumulation time of the sensor 1 or/and turn off the LED 11. Upon determination that underexposure occurs, the CPU 7 turns on the LED 11.

In determining an exposure amount, pre-driving is performed by scanning with thinning-out or skip scanning. A proper value of exposure amount is determined on the basis of the resultant image signal. Main driving is then performed for image recognition.

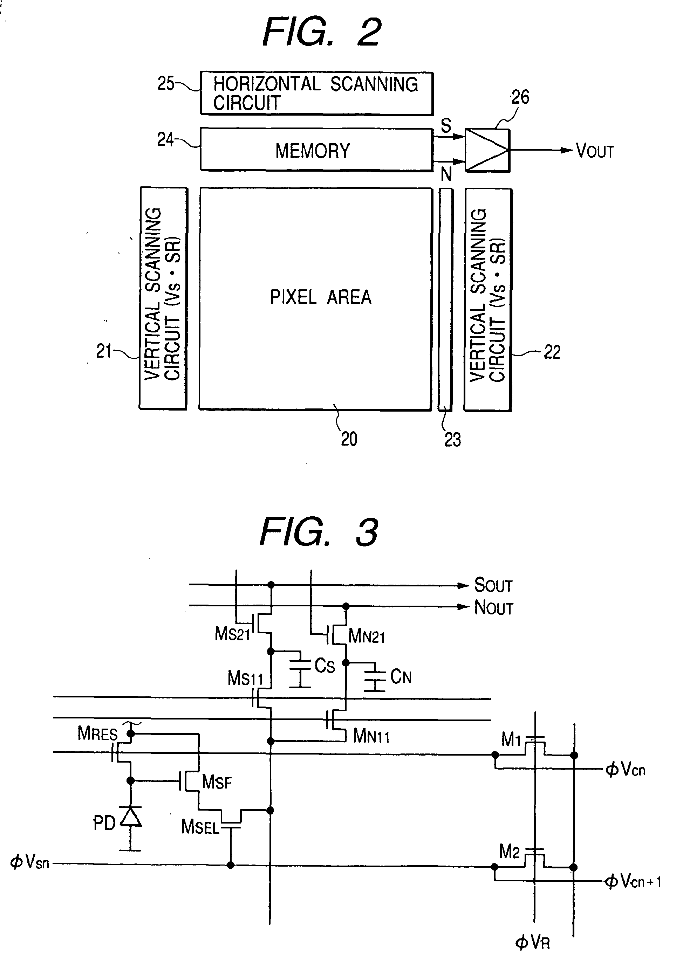

Fig. 2 is a block diagram showing the arrangement of the sensor 1. Fig. 3 is a circuit diagram showing the arrangement of one pixel of the pixel area of the sensor 1.

Referring to Fig. 2, a pixel area 20 is constituted by an array of a plurality of pixels. A first vertical scanning circuit (Vs · SR) 21 such as a shift register sequentially selects a pixel row from which data is read out. A second vertical scanning circuit (Vc · SR) 22 such as a shift register sequentially resets a pixel row to start accumulation. An all pixel reset switch (V_{R}) 23 resets all the pixels in the pixel area 20 at once. A memory 24 stores noise and sensor signals from the pixel area 20. A horizontal scanning circuit 25 scans the memory 24 on a pixel column basis to output noise and sensor signals from the memory 24. A differential amplifier 26 subtracts a noise signal from a sensor signal to output an output signal Vout.

As shown in Fig. 3, one pixel of the pixel area 20 is constituted by a photodiode PD, an amplification transistor MSF for amplifying a signal from the cathode side of the photodiode PD and outputting the amplified signal, a selection transistor MSEL for selectively outputting a signal from a pixel, and a reset transistor MRES for resetting the photodiode PD. One pixel column of the memory 24 is constituted by storage capacitors CS and CN, transistors MS11 and NM11 for transferring pixel and noise signals from pixels to the storage. capacitors CS and CN., and transistors MS21 and MN21 for outputting a pixel signal output Sout and noise signal Nout from the storage capacitors CS and CN to a horizontal output line. A portion of the all pixel reset switch 23, which corresponds to one pixel row, is constituted by transistors M1 and M2.

The transistors of the all pixel reset switch 23 are simultaneously turned on by setting a signal φV_{R} to H level, thereby resetting all pixels at once. By simultaneously resetting all the pixels, the accumulation start times for all the pixels in the pixel area 20 can be set to the same time. This operation can be used to set read sensitivity (to be described later).

By changing the start times of a signal φV_{C} for controlling reset operation and a signal φV_{S} for controlling signal output operation, the time between the reset operation and the signal output operation, i.e., the accumulation time, can be controlled. This is also called a rolling shutter.

Variations in Vth of the amplification transistor MSF serving as a pixel amplifier can be eliminated by subtracting a noise signal from a signal from a pixel. After a signal from a pixel is read out to the storage capacitor CS through the transistor MS11, the photodiode PD is reset. An output signal at this time is read out as a noise signal to the storage capacitor CN through the transistor MN11. A signal from the storage capacitor CS and a noise signal from the storage capacitor CN are respectively read out as the pixel signal output Sout and noise signal Nout to each horizontal output line through the transistors MS21 and MN21 controlled by the horizontal scanning circuit 25. These signals are then subtracted from each other by the differential amplifier 26. This makes it possible to eliminate the variations of the Vth and obtain a high S/N ratio.

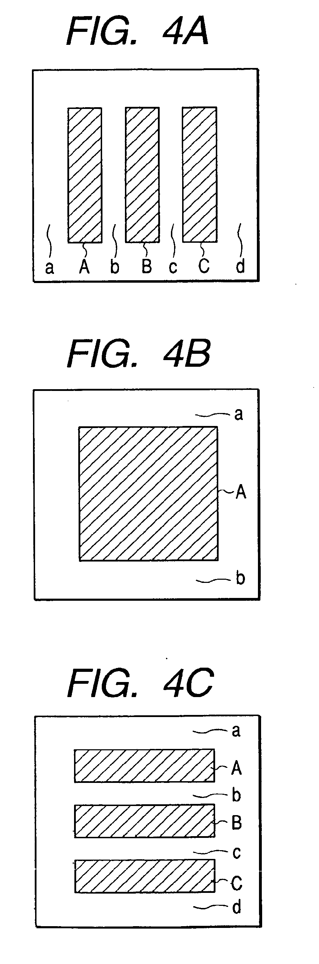

Figs. 4A to 4C are views showing read-out areas in a case wherein specific image data in a pixel area (image pickup area) are read out in pre-driving or the like. Fig. 4A shows an example in which the pixel area is divided in the vertical direction. Fig. 4B shows an example in which the pixel area is divided into the center and its peripheral portion. Fig. 4C shows an example in which the pixel area is divided in the horizontal direction. Referring to Figs. 4A to 4C, the pixel area includes read-out areas A, B, and C and areas a to d other than the read-out areas. In each of the read-out areas shown in Figs. 4A to 4C, a finger may exist. In setting read sensitivity (to be described later), in the case shown in Fig. 4C, for example, the time interval between the instant at which collective reset operation is done and the instant at which image data are read out from the areas A, B, and C corresponds to the accumulation time.

By changing read sensitivity (accumulation time) for each of the areas A, B, and C, a main driving condition can be set in a short period of time without changing the exposure amount on a frame basis. Therefore, the power consumption of a sensor or LED can be reduced.

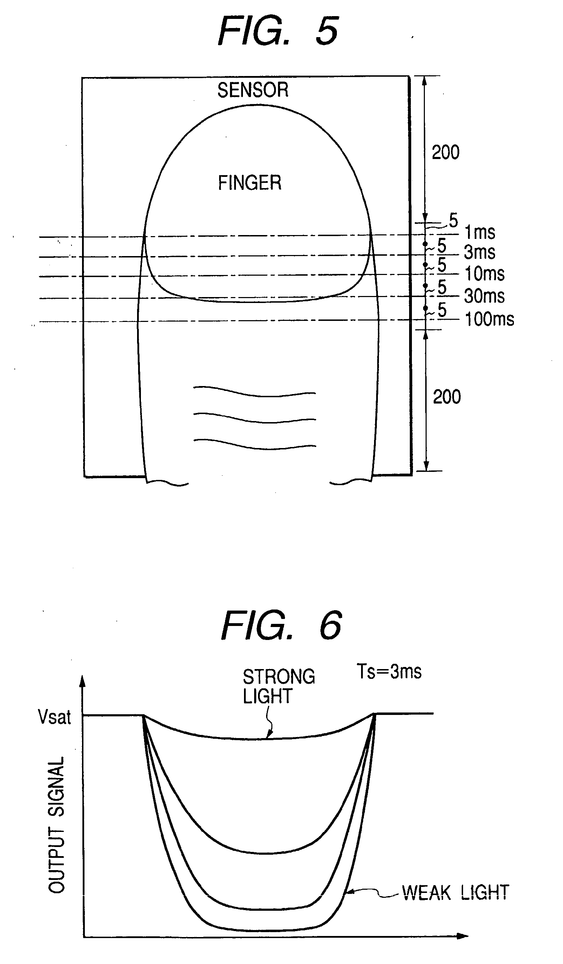

Fig. 5 is a view showing a sensor, a finger, and examples of the positions and accumulation times of pixel rows from which data are read out. Fig. 6 is a graph showing an example of an output signal when the accumulation time is 3 msec.

Whether an exposure amount is proper or not is determined with reference to the minimal value of a signal obtained by amplifying an image signal from an image pickup area of the sensor 1.

As shown in Fig. 6, on an area around the finger, external light or LED light is directly incident on the sensor, and hence the corresponding output signal becomes saturated. When external light or LED light is strong, since much light is transmitted through the finger, the output signal corresponding to the finger portion becomes also saturated. When external light or LED light is weak, since little light is transmitted through the finger, the output signal corresponding to the finger portion decreases to noise level. As is obvious from Fig. 6, since light is not easily transmitted through the central region of the finger or irradiation with LED light is started from the area around the finger, the corresponding output signal level decreases to the minimal value.

In this case, as shown in Fig. 5, if there is a sensor flaw, the accumulation time is changed for every five rows to avoid the flaw or increase the S/N ratio and is set to 1 msec, 3 msec, 10 msec, 30 msec, and 100 msec such that a signal is read out upon addition of data corresponding to five rows (addition processing may be done by an external processing circuit). As will be described later, referring to Fig. 5, the first 200 rows are skipped, and signals corresponding to accumulation times 1 msec to 100 msec are sequentially read out.

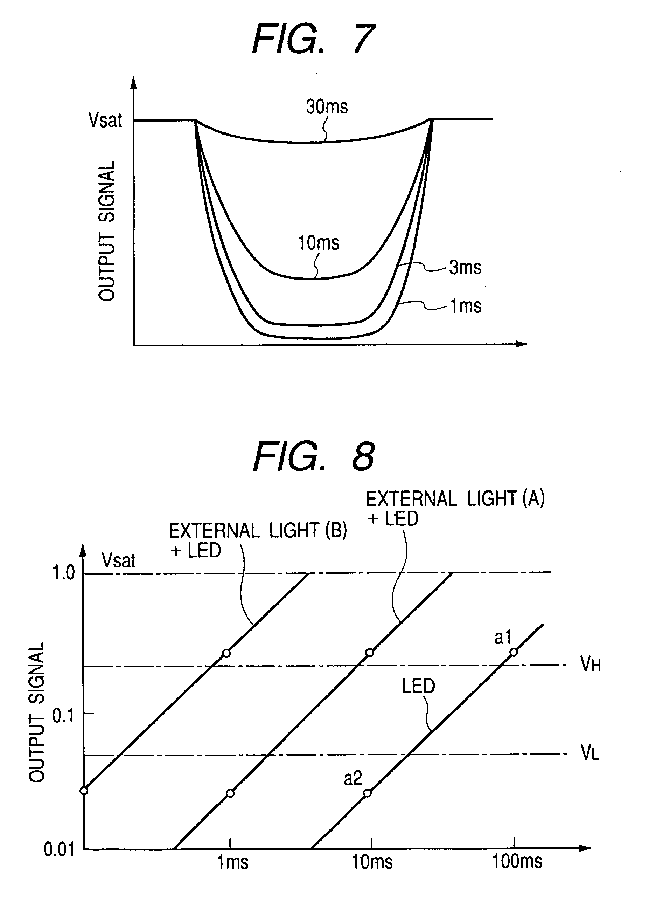

Fig. 7 is a graph showing an output signal with given external light and at the time when the LED is turned on. In this case, the accumulation time is set to 1 msec, 3 msec, 10 msec, and 30 msec under external light with a predetermined intensity. At the finger portion, as the accumulation time increases, the corresponding signal tends to become saturated, whereas as the accumulation time decreases, the signal level decreases. The signal waveform in Fig. 7 is shown with the omission of a change in signal amplitude dependent on noise from the sensor and the fingerprint.

Fig. 8 is a graph showing the relationship between the accumulation time and the output signal level when the light source is changed. Referring to Fig. 8, the abscissa represents the accumulation time; and the ordinate, the output signal level. The output signal level is expressed by an absolute value with a saturated value being 1. Referring to Fig. 8, examples of irradiation light are only LED light, external light (A) + LED light, and external light (B) + LED light (intensity of external light (B) > intensity of external light (A)).

If, for example, the accumulation time can be set in the range of 1 msec to 100 msec, an optimal exposure amount in main driving can be determined from the corresponding signal level.

Referring to Fig. 8, if an output signal with accumulation time Ts = 100 msec has an output value a1, an output signal with Ts = 10 msec has output value a2 = a1/10, and an output signal with Ts = 1 msec has an output value bR = a1/100. Therefore, an optimal exposure condition can be calculated from the output values a2 and a1. An exposure amount is determined from the minimal value of the output signal level of the finger (a value corresponding to almost the central portion of the finger).

Since irradiation with LED light is started from the area around the finger, a signal corresponding the area around finger easily becomes saturated, and a signal corresponding to the center of the finger has a low level (so as to have a minimal value). For this reason, exposure calculation is done by using the signal corresponding the center of the finger. An exposure amount is set such that an output signal falls within the range of V_{L} to V_{H}.

The value V_{L} is set in consideration of noise, and the value V_{H} is set in consideration of shading of an output signal at the time of design.

Assume that noise in the sensor is 5 mV. In this case, if V_{L} = 50 mV is set, with increase of the signal gain increases, the signal can be binarized to allow data processing even in case of that LED light deteriorates.

At a high temperature, a dark current in the sensor increases, and hence an increase in noise due to the dark current must be taken into consideration. When the dark current is large, since V_{L} > 50 mV is required, the difference of set levels between V_{L} and V_{H} decreases. Although it depends on the size of a finger, when V_{H} was set to 200 mV to 500 mV, high authenticability was obtained in an experiment. It is therefore preferable to set V_{H} to 200 mV to 500 mV. V_{L} and V_{H} are set in consideration of the S/N ratio of the sensor, which is the ratio of the signal level to the noise (random noise, fixed pattern noise, dark current noise, and the like).

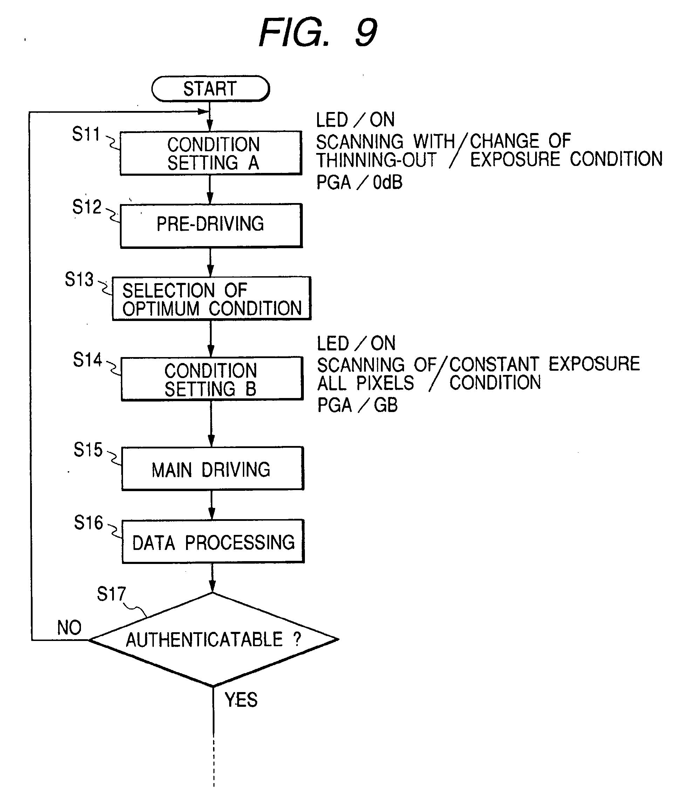

Fig. 9 shows an example of a flow chart showing the operation of the image recognition apparatus according to an embodiment of the present invention. In this case, the LED serving as a light-emitting element is turned on in both pre-driving and main driving.

First of all, a finger is placed on the sensor, and an image pickup condition for pre-driving is set (condition setting A) (step S11). In this case, the LED is turned on, scanning with thinning-out and change of the exposure condition is set as a scanning condition for the sensor as shown in Fig. 5, and the PGA is set to 0 dB. Pre-driving is then performed under the set image pickup condition (step S12). An optimum condition is selected on the basis of this pre-driving (step S13), and an image pickup condition for main driving is set (condition setting B) (step S14). In this case, the LED is turned on, all pixel scanning with a constant exposure condition (the accumulation time being set to a proper value) is set as a scanning condition for the sensor, and the gain of the PGA is set to GB (proper value). Main driving is then performed under the set image pickup condition (step S15). The output signal from the sensor is subjected to data processing (step S16). The fingerprint of the finger is authenticated from the read data (step S17). The fingerprint is authenticated depending on whether or not the pre-registered fingerprint of the user coincides with the read data of the fingerprint in this main driving. If the user is authenticated, subsequent processing, e.g., use of a cash card or credit card and operation of the personal computer are permitted and executed. If the user cannot be authenticated, the flow returns to step S11.

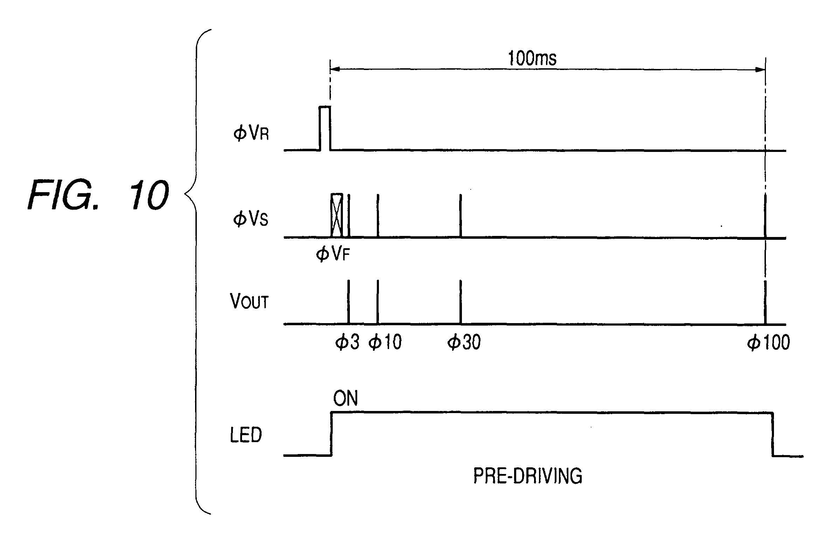

Fig. 10 is a timing chart showing an example of the timing of pre-driving. Assume that read-out areas have the arrangement shown in Fig. 4A, the respective areas from which signals are stored with sensitivity corresponding to the accumulation times, 3 msec, 10 msec, 30 msec, and 100 msec, are set for every five rows in consideration of sensor flaws or an increase in S/N ratio. A signal is read out by adding data of each five rows. All the pixels are simultaneously reset in response to the signal φV_{R}, and the LED 11 (shown in Fig. 1) is turned on. The signal φV_{S} is then sent from the first vertical scanning circuit 21 to the pixel area 20 to read out a pixel signal. At this time, skip scanning (200 pixel rows are skipped, i.e., scanning is done upon skipping 200 pixel rows) is performed to read out a signal from the center of the sensor on which the central portion of the finger is placed. Fig. 10 shows a skip scanning interval φV_{F}. Skip scanning can be realized by scanning the shift register at a speed higher than that in normal scanning operation.

First of all, data are read from five pixel rows 3 msec after all the pixels are simultaneously reset (accumulation time Ts = 3 msec). After 7 msec, data are read out from five pixel rows whose accumulation time is Ts = 10 msec. Likewise, after 20 msec, data are read out from five pixel rows whose accumulation time is Ts = 30 msec. After 70 msec, data are read out from five pixel rows whose accumulation time is Ts = 100 msec. Fig. 10 shows read pixel signals Vout (φ3, φ10, φ30, and φ100).

Fig. 7 shows the signals obtained at this time. For example, an exposure condition is set from the signals corresponding to 3 msec and 10 msec such that low signal level = V in main driving is set to satisfy V_{L} < V < V_{H}. A signal gain is set according to the assumed value of V.

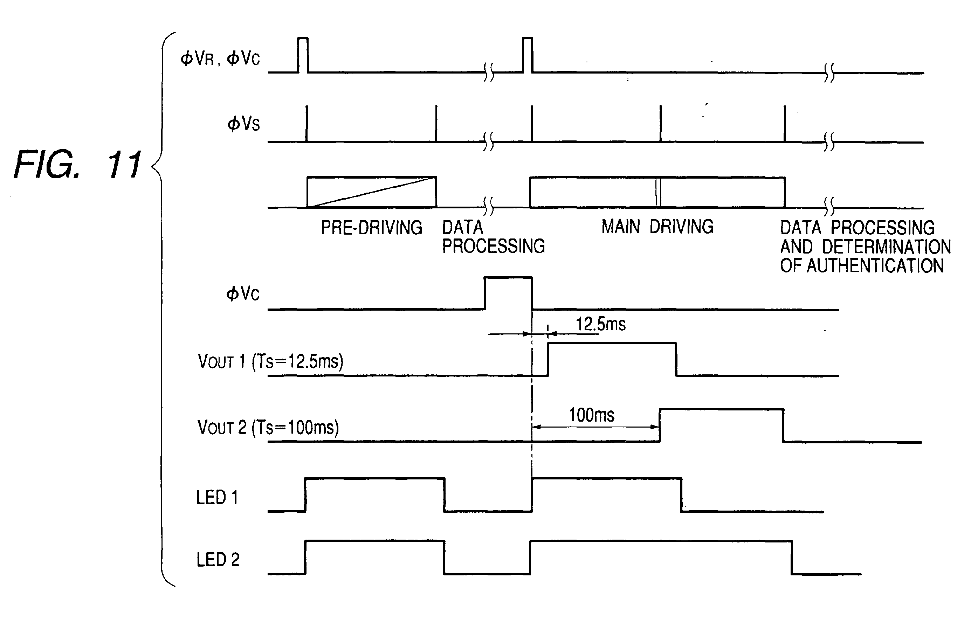

Fig. 11 is a timing chart showing pre-driving and main driving. After pre-driving is performed to determine an exposure condition by data processing, main driving is performed. Data processing and authentication determination are then performed. An exposure time in main driving can be set in accordance with the scanning interval between φV_{C} and φV_{S}. An accumulation time of 12.5 msec can be set by delaying the pixel read signal φV_{S} from the pixel reset signal φV_{C} by 12.5 msec. An output Vout1 also delays by 12.5 msec.

Likewise, an accumulation time of 100 msec can be realized by delaying the pixel read signal φV_{S} from the pixel reset signal φV_{C} by 100 msec. An output Vout2 also delays by 100 msec. The LED is kept on in the interval between the instant at which exposure is started and the instant at which all stored signals are read. That is, in the case of Vout1, the LED is kept on in an interval LED1, whereas in the case of Vout2, the LED is kept on in an interval LED2.

As described above, since authentication can be done by performing pre-driving and main driving once, operation can be done within a short period of time with low power consumption.

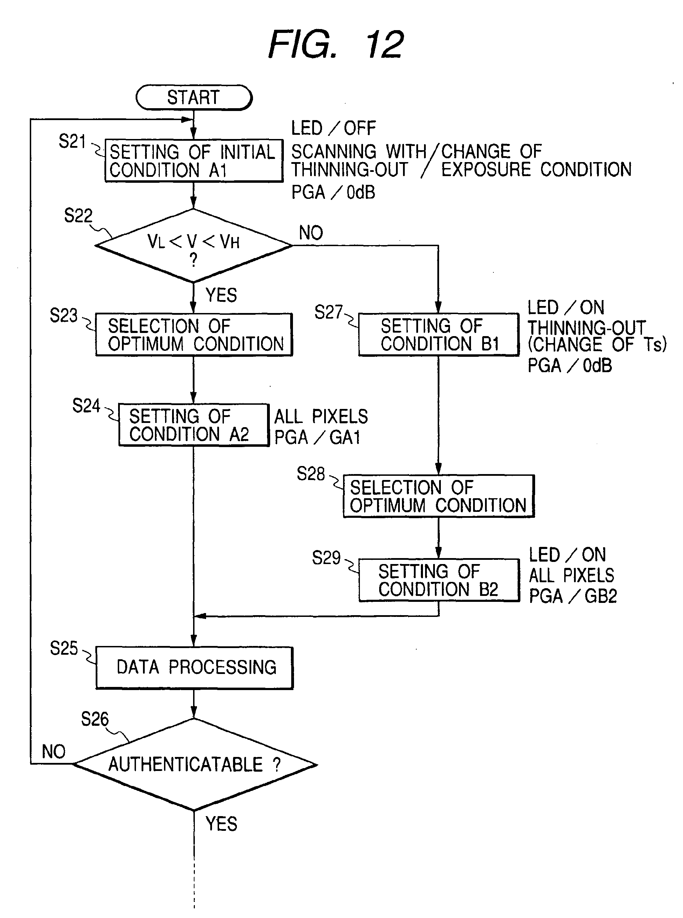

Fig. 12 shows another flow chart in this embodiment. This shows a method of determining an optimal exposure condition with LED being OFF and finding an optimal exposure condition with LED being ON if it is determined that the condition is not suitable. First of all, a finger is placed on the sensor, and an image pickup condition for pre-driving is set (condition setting A) (step S21). In this case, the LED is turned off, scanning with thinning-out and change of an exposure condition is set as a scanning condition for the sensor, and the PGA is set to 0 dB. Pre-driving is then performed in the set image pickup condition, and it is checked whether or not the level V of the output signal from the sensor satisfies V_{L} < V < V_{H} (step S22). If V_{L} < V < V_{H}, an optimum condition is selected (step S23), and an image pickup condition for main driving is set (condition setting A2) (step S24). In this case, the LED is turned off, all pixel scanning with a constant exposure condition is set as a scanning condition for the sensor, and the PGA is set to GA1. Main driving is then performed in the set image pickup condition, and the output signal from the sensor is subjected to data processing (step S25). Thereafter, authentication is performed with respect to the fingerprint of the finger on the basis of the read data (step S26). The fingerprint is authenticated depending on whether or not the pre-registered fingerprint of the user coincides with the read data of the fingerprint in this main driving. If the user is authenticated, subsequent processing, e.g., use of a cash card or credit card and operation of the personal computer are permitted and executed. If the user cannot be authenticated, the flow returns to step S21. If V_{L} < V < V_{H} is not satisfied, an image pickup condition for pre-driving is set again (condition setting B1) (step S27). In this case, the LED is turned on, scanning with thinning-out and change of an exposure condition is set as a scanning condition for the sensor, and the PGA is set to 0 dB. Pre-driving is then performed in the set image pickup condition, and an optimum condition is selected (step S28). An image pickup condition for main driving is then set (condition setting B2) (step S29). In this case, the LED is turned on, all pixel scanning with a constant exposure condition is set as a scanning condition for the sensor, and the PGA is set to GB2. The flow then advances to step S25.

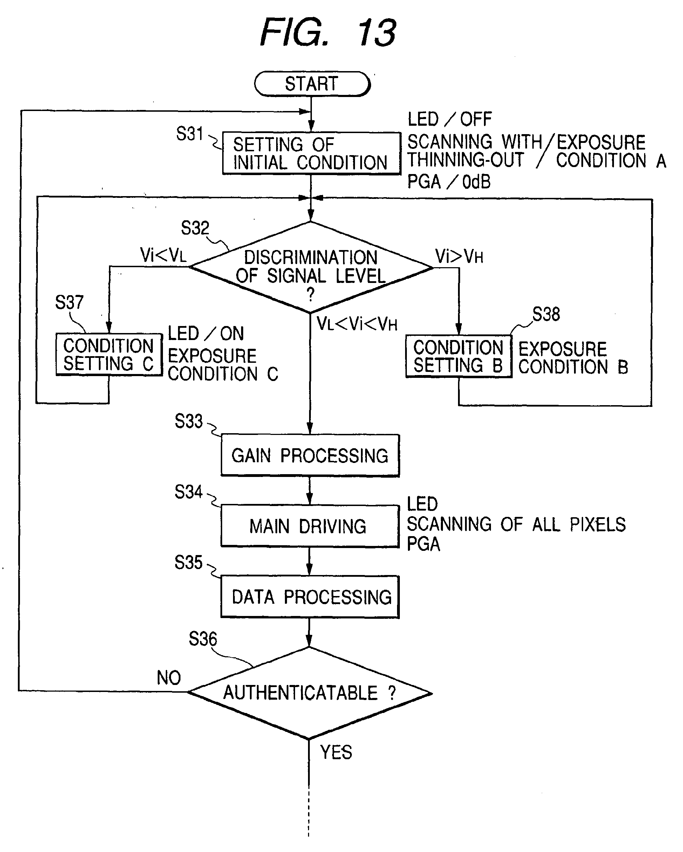

Fig. 13 shows still another flow chart in this embodiment. This shows a method of searching for an exposure condition on a frame basis. In this case, the accumulation time is changed by a rotary shutter. First of all, a finger is placed on the sensor, and an image pickup condition for pre-driving is set (initial condition setting) (step S31). In this case, the LED is turned off, scanning with thinning-out and a predetermined exposure condition is set as a scanning condition for the sensor, and the PGA is set to 0 dB. Pre-driving is then performed in the set image pickup condition, and it is checked whether or not a level Vi of the output signal from the sensor satisfies Vi < V_{L}, V_{L} < Vi < V_{H}, or Vi > V_{H} (step S32). If V_{L} < Vi < V_{H}, an optimum condition is selected, and an image pickup condition for main driving is set (gain processing) (step S33). In this case, the LED is turned off, all pixel scanning with a constant exposure condition is set as a scanning condition for the sensor, and the PGA is set to a proper gain. Main driving is then performed in the set image pickup condition (step S35), and the output signal from the sensor is subjected to data processing (step S35). Thereafter, authentication is performed with respect to the fingerprint of the finger on the basis of the read data (step S36). The fingerprint is authenticated depending on whether or not the pre-registered fingerprint of the user coincides with the read data of the fingerprint in this main driving. If the user is authenticated, subsequent processing, e.g., use of a cash card or credit card and operation of the personal computer are permitted and executed. If the user cannot be authenticated, the flow returns to step S21. If Vi < V_{L}, the LED is turned on, scanning with thinning-out and a prolonged accumulation time is set as a scanning condition for the sensor, and the PGA is set to 0 dB. Thereafter, pre-driving is performed in the set image pickup condition, the determination processing in step S32 is performed. If Vi > V_{H}, the LED is turned off, scanning with thinning-out and a shortened exposure time is set as an image pickup condition for the sensor, and the PGA is set to 0 dB. Thereafter, pre-driving is performed in the set image pickup condition, and the determination processing in step S32 is performed.

As has been described above, according to this embodiment, proper exposure can be done in both a dark place and a bright place by controlling the LED and electronic shutter.

In addition, according to the present embodiment, since an exposure condition is determined on the basis of the extremal of a read signal, determination can be done in a shorter period of time than when saturation of an object is detected.

By performing reading operation in pre-driving while changing the sensitivity for each area, short-time processing can be done with low power consumption. Since a plurality of rows are read, even if there are flaws in some pixel rows, data can be read. The S/N ratio can be increased by adding signals obtained from a plurality of rows.

If shading occurs due to the relationship between illumination light and object light, the authenticability can be improved by determining an exposure condition such that the extreme value of a signal falls within a given signal level range.

As described above, the image processing apparatus of the present embodiment can perform high-precision exposure control.

Many widely different embodiments of the present invention may be constructed without departing from the scope of the present invention. It should be understood that the present invention is not limited to the specific embodiments described in the specification, except as defined in the appended claims.

## Claims

1. A fingerprint image processing apparatus comprising:
a light source (11) for irradiating a finger with light;
an image pickup unit (1) having a pixel area in which a plurality of pixels are arranged in a matrix so as to convert light from a finger into an image signal;
a driving unit (5) for driving said image pickup unit;
a detection unit (7) for detecting an image signal from said image pickup unit and determining whether or not the amount of exposure of the finger is proper; and
a control unit (6,7) for controlling the accumulation time of electric charge in said image pickup unit on the basis of the determination made by said detection unit,
**characterized in that** said driving unit is adapted to drive said image pickup unit in a pre-driving mode in which a part of said plurality of pixels are reset simultaneously to start an electric charge accumulation period **in that** part of the plurality of pixels, and thereafter to read out the electric charges accumulated from that part of the plurality of pixels at different timings in respect of different selected pixel rows of said matrix, the pixel rows being approximately in the same direction as the width direction of the irradiated finger so as to obtain a plurality of signals representing different charge accumulation periods, and to drive said image pickup unit in a main driving mode so as to read out signals from the plurality of pixels including the part of the plurality of pixels read out in the pre-drive mode,
said detection unit carrying out the determination on the basis of the plurality of signals having the different accumulation times obtained in the pre-driving mode, and said driving unit being adapted to carry out the main driving mode to read out an image signal in accordance with the accumulation time as controlled by said control unit.

2. Apparatus according to claim 1, wherein said apparatus further comprises a recognition unit for comparing a pre-stored fingerprint image with a fingerprint image from said image pickup unit.

## Patentansprüche

1. Fingerabdruckbildverarbeitungsvorrichtung mit:
einer Lichtquelle (11) zum Bestrahlen eines Fingers mit Licht,
einer Bildaufnahmeeinheit (1) mit einem Bildelementbereich, in dem eine Vielzahl von Bildelementen in einer Matrix angeordnet ist, um Licht von einem Finger in ein Bildsignal umzuwandeln,
einer Ansteuereinheit (5) zum Ansteuern der Bildaufnahmeeinheit,
einer Erfassungseinheit (7) zum Erfassen eines Bildsignals von der Bildaufnahmeeinheit und zum Bestimmen, ob der Belichtungsbetrag des Fingers angemessen ist oder nicht, und
einer Steuereinheit (6, 7) zum Steuern der Akkumulationszeit elektrischer Ladung in der Bildaufnahmeeinheit auf der Grundlage der durch die Erfassungseinheit durchgeführten Bestimmung,
**dadurch gekennzeichnet, dass** die Ansteuereinheit angepasst ist, die Bildaufnahmeeinheit in einer Voransteuerbetriebsart anzusteuern, in der ein Teil der Vielzahl von Bildelementen gleichzeitig rückgesetzt wird, um eine Akkumulationsspanne elektrischer Ladung in jenem Teil der Vielzahl von Bildelementen zu starten und um danach die elektrischen Ladungen, die von jenem Teil der Vielzahl von Bildelementen akkumuliert werden, bei verschiedenen Zeitgaben hinsichtlich verschiedener ausgewählter Bildelementzeilen der Matrix auszulesen, wobei sich die Bildelementzeilen näherungsweise in der gleichen Richtung wie die Breitenrichtung des bestrahlten Fingers befinden, um eine Vielzahl von verschiedene Ladungsakkumulationsspannen darstellenden Signalen zu erhalten, und um die Bildaufnahmeeinheit in einer Hauptansteuerbetriebsart derart anzusteuern, um Signale von der Vielzahl von Bildelementen einschließlich des Teils der Vielzahl von in der Voransteuerbetriebsart ausgelesenen Bildelementen auszulesen,
wobei die Erfassungseinheit die Bestimmung auf der Grundlage der in der Voransteuerbetriebsart erhaltenen Vielzahl von Signalen mit den verschiedenen Akkumulationsspannen ausführt und die Ansteuereinheit angepasst ist, die Hauptansteuerbetriebsart auszuführen, um ein Bildsignal gemäß der wie durch die Steuereinheit gesteuerten Akkumulationsspanne auszulesen.

2. Vorrichtung gemäß Anspruch 1, in der die Vorrichtung weiterhin eine Erkennungseinheit zum Vergleichen eines vorab gespeicherten Fingerabdruckbildes mit einem Fingerabdruckbild von der Bildaufnahmeeinheit umfasst.

## Revendications

1. Appareil de traitement d'images d'empreintes digitales, comportant :
une source de lumière (11) destinée à irradier un doigt de lumière ;
une unité (1) de saisie d'image ayant une zone de pixels dans laquelle de multiples pixels sont agencés en une matrice afin de convertir la lumière provenant d'un doigt en un signal d'image ;
une unité d'attaque (5) destinée à attaquer ladite unité de saisie d'image ;
une unité de détection (7) destinée à détecter un signal d'image provenant de ladite unité de saisie d'image et à déterminer si la quantité d'exposition du doigt est correcte ou non ; et
une unité de commande (6, 7) destinée à commander le temps d'accumulation d'une charge électrique dans ladite unité de saisie d'image sur la base de la détermination réalisée par ladite unité de détection,
**caractérisé en ce que** ladite unité d'attaque est conçue pour attaquer ladite unité de saisie d'image dans un mode d'attaque préalable dans lequel une partie desdits multiples pixels sont réinitialisés simultanément pour commencer une période d'accumulation de charge électrique dans cette partie des multiples pixels et, ensuite, pour extraire les charges électriques accumulées de cette partie des multiples pixels à des temps différents par rapport à des rangées de pixels sélectionnées différentes de ladite matrice, les rangées de pixels étant approximativement dans la même direction que la direction de la largeur du doigt irradié afin d'obtenir de multiples signaux représentant différentes périodes d'accumulation de charge, et pour attaquer ladite unité de saisie d'image dans un mode d'attaque principal afin d'extraire des signaux des multiples pixels comprenant la partie des multiples pixels extraite dans le mode d'attaque préalable,
ladite unité de détection exécutant la détermination sur la base des multiples signaux ayant les temps d'accumulation différents obtenus dans le mode d'attaque préalable, et ladite unité d'attaque étant conçue pour exécuter le mode d'attaque principal afin d'extraire un signal d'image conforme au temps d'accumulation tel que commandé par ladite unité de commande.

2. Appareil selon la revendication 1, lequel appareil comporte en outre une unité de reconnaissance destinée à comparer une image d'empreinte digitale préalablement stockée à une image d'empreinte digitale provenant de ladite unité de saisie d'image.
